# EUROPEAN PATENT SPECIFICATION

(11) **EP 4 146 531 B1**
(45) Date of publication and mention of the grant of the patent: **22.07.2026**
(21) Application number: 21724654.5
(22) Date of filing: 07.05.2021
(51) Int. Cl.: B62K 19/16, B62K 19/18, B62K 19/30

(54) **BICYCLE FRAME AND METHOD FOR MANUFACTURING**
FAHRRADRAHMEN UND VERFAHREN ZUR HERSTELLUNG
CADRE DE BICYCLETTE ET PROCÉDÉ DE FABRICATION

(30) Priority: 08.05.2020 BE 202005314
(43) Date of publication of application: 15.03.2023
(73) Proprietor: Triangle's - Cycling Equipments, S.A., 3750-860 Borralha - Agueda (PT)
(72) Inventor: VERHUIZEN, Alexander, 3360 Bierbeek (BE); SIMONS, Robbe, 2140 Borgerhout (BE)
(74) Representative: RCF - Protecting Innovation, S.A.
(86) International application number: PCT/EP2021/062155
(87) International publication number: WO 2021/224460

(56) References cited:
- EP-A1- 3 595 853
- EP-A2- 0 352 663
- DE-A1- 102013 223 298
- US-A- 5 464 240
- US-A- 5 609 349
- US-A1- 2018 186 085

## Description

### TECHNICAL FIELD AND BACKGROUND

The present disclosure relates to a composite frame comprising a fused interconnect between a first hollow frame part comprising a first thermoplastic fiber reinforced composite and a second frame part comprising fiber reinforced shell parts and a method of manufacturing thereof. In particular, the present disclosure relates to a bicycle frame and a method of manufacturing thereof. The bicycle frame comprises a fused interconnect between a first hollow tube part comprising a first thermoplastic fiber reinforced composite and a second hollow tube part comprising fiber reinforced shell parts.

Manufacturing of bicycle frames from fiber reinforced composites, e.g. carbon fiber composites is well known in the field. A complete integral (seamless) bike may be formed by draping of pre-pregs in a mould. For example, in a mould including an outer mould in combination with an inner mould, to define a shape of a finalized cured product. To mitigate manufacturing complexity, e.g., mould complexity, manufacturers typically consider joining of preformed parts.. Reference is e.g. made to US4900048A disclosing the manufacturing of bicycle parts, e.g. frames, from separate members which are joined in a separated joining step to form a light weight bicycle part, e.g. frame.

A known method to join pre-manufactured parts involves the use of thermoset composite materials. Such methods typically include draping of pre-preg materials, e.g. webs, sheets or strips, around said pre-manufactured parts, interconnecting said parts in a heating (curing) step, e.g. in an oven at elevated temperature, to form a completed consolidated bicycle part, e.g. frame. As the curing process is finished the shape of the parts is irreversibly set. Disadvantages of thermoset materials include poor recyclability and repairability and/or a need to provide a complex and thus costly mould for each part of product of a given size or shape. Furthermore, the joints at which the separately manufactured parts are interconnected are known to negatively affect the performance of the formed product, e.g. in terms of stiffness and/or strength, allowing, e.g. cracking and or failure of the part, e.g. frame, at said joints under heavy loads. For example, document DE 10 2013 223298A1, discloses the following features of claim 1 and of claim 12 respectively. Method of manufacturing a frame, the method comprising: - providing a first hollow tube part comprising a first thermoplastic fiber reinforced composite comprising a thermoplastic polymer matrix and an embedded structure of fibers; - inserting an end portion of the first hollow tube part into the second hollow tube part, wherein at the overlap; - joining the second hollow tube part and the first hollow tube part in said relative position to each other. A frame, the frame comprising an interconnection between a first hollow tube part comprising a first thermoplastic fiber reinforced composite comprising a thermoplastic matrix and an embedded structure of fibers; and a second hollow tube part comprising a second thermoplastic fiber composite comprising a thermoplastic matrix and fibers; wherein the interconnection includes an overlap between the first hollow tube part and the second hollow tube part formed of: an end portion of the first hollow tube part overlapping the second part hollow tube part.

An alternative joining method involves the use of thermoplastic materials. Typically, such methods, e.g. as disclosed in WO18170084A1, include the manufacturing, e.g. press forming, of shell parts, which are joined in a subsequent joining step. Joined parts, e.g. tubes, of fused thermoplastic shell parts can disadvantageously possess reduced strength along the seam, in particular compared to fiber reinforced parts, e.g. tubes, made from cured thermoset pre-pregs, wherein the fiber reinforcement is provided essentially continuously around the part. WO18170084A1 suggests provision of fiber reinforced sheets, e.g. webs or strips, across a seam of preformed shell parts to improve the strength of a fused part. Provision of said strips can disadvantageously negatively affect an outer appearance of the finalized product at the joint, requiring surface finishing processes. Further, it was found that the effect of provision of said strips was limited and/or inconsistent, yielding bicycle parts, e.g. frames, having insufficient strength at the seams, in particular for frames having joints (interconnects) between parts, e.g. tube members, of different diameter.

The presently disclosed method of manufacturing a bicycle frame aims to provide a method and/or to mitigate at least one or more of the above disadvantages.

### SUMMARY

Aspects of the present disclosure relate to a method of manufacturing a composite frame, e.g. the joining of two or more frame parts, e.g. hollow tube parts or shell parts, across a seam. In particular, the present disclosure relates to a method of manufacturing a bicycle frame. The method comprises: providing a first frame part, e.g. a first hollow tube part, comprising a first thermoplastic fiber reinforced composite comprising a thermoplastic polymer matrix and an embedded structure of fibers. Further, the method comprises providing at least a first fiber reinforced shell part and a second fiber reinforced shell part. The first fiber reinforced shell part and the second fiber reinforced shell part are arranged to form, upon joining, a second hollow tube part forming the second frame part. Each reinforced shell part comprising a second thermoplastic fiber composite including a thermoplastic polymer matrix and fibers. The first and second frame part are joined in a joining step. In one embodiment, the joining step comprises positioning the first fiber reinforced shell part adjacent to the second fiber reinforced shell part across a seam to form a second hollow tube part; inserting an end portion of the first hollow tube part into the second hollow tube part, or inserting an end portion of the second hollow tube part in the first hollow tube part, forming an overlap between the first hollow tube part and the fiber reinforced shell parts, i.e. between the frame parts; and fusing the first fiber reinforced shell part, the second fiber reinforced shell part, and the first hollow tube part in said relative position to each other, wherein fusing includes: heating the first hollow tube part and the fiber reinforced shell parts at least at a position of the overlap to a temperature above a softening temperature of the first and second thermoplastic fiber composite; and consolidating the heated first and second thermoplastic fiber composite by pressure to form a fused interconnect between the hollow tube parts, wherein at the overlap the embedded structure of fibers of the first hollow tube part crosses a boundary between the first hollow frame part and the second hollow frame part of shell parts

It will be understood that, similar to the second frame part, the first fiber reinforced frame part may be formed of two or more joined, e.g. pre-joined, shell parts. Optionally, the parts forming the first fiber reinforced frame part may be joined together with the parts forming the second fiber reinforced frame part, i.e. in a common joining step. Accordingly, in some embodiments, the joining step may comprises positioning the parts forming the first fiber reinforced frame part across a seam to form the first hollow tube part. Forming the frame parts of shell parts advantageously allows more flexibility in frame manufacturing, e.g. allowing manufacturing of pre-formed shell parts which can be used in a plurality of frames, e.g., frame designs requiring a range of frame parts of different length and/or joints across a different angle. Joining the parts forming the first fiber reinforced frame part and the parts forming the second fiber reinforced frame part in a common joining step advantageously reduces a number of process steps.

After consolidation the frame parts are inseparably joined together. Advantageously, the method according to the invention can enable manufacture of a monocoque frame which is light weight and stiff. The method according to the invention can also be used to advantage in the manufacturing of other bicycle parts, e.g., an integrated steering bar handle, and/or wheel parts, e.g., comprising a plurality of fiber reinforced spokes joined around a central part).

Inventors found that by providing the overlap such that the embedded structure of fibers of the first hollow tube part crosses a boundary between the first hollow tube part and the second hollow tube part of shell parts, improves the strength of the interconnect and accordingly of the bicycle frame, wherein a longer overlap (larger overlap area) was found to yield a stronger connection. It will be appreciated that in principle there is no upper limit for a length (or area) of the overlap. Inventors found that for bicycle applications an overlap length of at least five millimeter can suffice. Preferably the overlap is longer, e.g. at least about one centimeter or more, e.g. in a range between 1.5 and 5 centimeter, e.g. about two centimeter.

Preferably, the embedded structure of fibers also crosses the seam between the shell parts of the second hollow tube part at a position of the overlap, to further improve a strength of the interconnection between the shell parts. Preferably, the temperature at a position of the overlap is raised to a temperature above a softening temperature of the first and second thermoplastic fiber composite. The softening temperature may be understood to be a melting temperature. Heating above a melting temperature of the thermoplastic fiber composites can improve flow and/or mixing of the thermoplastic fiber composites, e.g. across an interface or boundary between parts. Improved flow and/or mixing of the thermoplastic fiber composites across an interface, boundary, or across a seam between parts can even further improve a strength of the interconnection between tube part and shell parts and/or between the shell parts. Thus a strong integral bond between the parts can be achieved and/or an improved monolithic behavior of the frame. It will be appreciated that the softening temperature (flowing temperature) may depend on applied pressure and can be adjusted accordingly. To speed up the joining process, e.g. reduce the time to attain a melt, the temperature can be increased to above the melting temperature of the respective materials, preferably in a range above said melting temperatures, e.g. between five and fifty degrees above the respective softening temperatures.

In some embodiments first hollow tube part and/or the shell parts include other components or parts, e.g. metal parts or the like. In a preferred embodiment, the first hollow tube part and/or the shell parts essentially consist of the thermoplastic fiber composite. By having the first hollow tube part and/or the shell parts respectively essentially consisting of (essentially formed of or made from) the respective thermoplastic fiber composite, a light weight yet stiff frame can be constructed. Preferably, the frame is manufactured without comparatively heavy parts, e.g. metal tubes or tube sections.

It will be appreciated that, in general, the fiber reinforced composite may be understood to comprise any suitable type of reinforcement fibers and/or bundles of reinforcement fibers, e.g. rebar, including but not limited to synthetic fibers such as glass fibers, carbonaceous, polymer fibers, metal fibers, mineral fibers such as basalt fibers and/or natural fibers. Preferred fibers include fibers having a high specific stiffness (a stiffness to weight ratio) in excess of about 1, preferably in excess of about 2, such as carbon and steel fibers. In a preferred embodiment a combination of stainless steel fibers and carbon fibers is used.

It will be further appreciated that the thermoplastic polymer matrix material may be understood to comprise any suitable thermoplastic polymer or mixture of polymers. Suitable polymers include but are not limited to: polypropylene, polyethylene, polyethylene terephthalate, polyamide (nylon),polyetheretherketone, polyetherketoneketone, polyetherimide, polyphenylene sulphide, (poly)acrylonitrile-butadienestyrene (ABS), polylactic acid (PLA), polycarbonate (PC), and polyaryletherketon (PAEK). Further suitable reinforcement fibers and thermoplastic matrix material to be used can be found in WO 2018/050875.

The first thermoplastic fiber reinforced composite and the second thermoplastic fiber reinforced composite may be of the same nature or may be different but are preferably of the same nature. Using composites of the same nature, e.g. the same type of polymer, was found to improve joint strength. Using composites of the different nature, e.g., as the case in e.g. gluing, can result in small visual disturbances, e.g., cracks, presumably due to a different behavior in response to varying temperature exposures.

Further aspects of the present disclosure relate to a bicycle frame, preferably a bicycle frame obtainable by the method according to the present invention and/or comprising components described in relation to the presently disclosed method. The bicycle frame comprises a fused interconnect between a first frame part, e.g., a first hollow tube part and a second frame part, e.g. a second hollow tube part. The first hollow tube part comprises a first thermoplastic fiber reinforced composite comprising a thermoplastic matrix and an embedded structure of fibers. The second hollow tube part comprises at least a first fiber reinforced shell part and a second fiber reinforced shell part each formed of a second thermoplastic fiber reinforced composite comprising a thermoplastic matrix and fibers. The fused interconnect, e.g. the interconnect formed using the method according to the invention, includes an overlap between the first hollow tube part and the second hollow tube part. The overlap is formed of an end portion of the first hollow tube part overlapping the second hollow tube, or of an end portion of the second hollow tube part overlapping the first hollow tube part. As described in relation to the method, the embedded structure of fibers of the first hollow tube part at the overlap crosses an overlap between the hollow tube parts.

In general, the method according to the invention can be understood to provide improvements relating to improved manufacturability; increased strength of the interconnect between joined frame parts; and/or an improved surface finish, in particular at the joint.

The improved strength is believed to at least in part relate to the provision of the overlap between the first hollow tube part and the fiber reinforced shell parts, wherein at the overlap the embedded structure of fibers of the first hollow tube part crosses a boundary between the first hollow tube part and the second hollow tube part of shell parts.

The improved manufacturability is believed to at least in part relate to the use of shell parts to form one of the hollow tube parts (frame parts) from shell part whereas the other hollow tube parts may be formed from shell parts or from a seamless hollow tube part, e.g. a pre-formed seamless hollow tube part, depending on design criteria such as tube complexity and/or tube diameter.

The improved surface finish is believed to at least in part relate to the composition of the tube parts each comprising a thermoplastic matrix allowing the formation of a continuous fused interconnect between the tube parts and/or the shell parts.

### BRIEF DESCRIPTION OF DRAWINGS

These and other features, aspects, and advantages of the apparatus, systems and methods of the present disclosure will become better understood from the following description, appended claims, and accompanying drawings wherein:
FIG 1 depicts a schematic exploded view of an embodiment of a bicycle frame formed of joined parts;
FIG 2A schematically illustrates a portion of an embodiment of a bicycle frame comprising a fused interconnect between a first hollow tube part formed and a second hollow tube part during an intermediary stage of manufacturing;
FIG 2B schematically illustrates a cross section side view during an intermediary stage of manufacturing an embodiment of a bicycle frame comprising a fused interconnect between a first hollow tube part formed and a second hollow tube part;
FIG 3A depicts a schematic cross section view of the embodiment depicted in FIB 2B;
FIG 3B schematically illustrates a cross section side view during an intermediary stage of manufacturing an embodiment of a bicycle frame comprising a fused interconnect between a first hollow tube part formed and a second hollow tube part;
FIG 4A depicts a schematic cross section view of an embodiment of a second hollow tube part; and
FIG 4B schematically illustrates an other portion of an embodiment of a bicycle frame comprising a fused interconnect between a first hollow tube part formed and a second hollow tube part during an intermediary stage of manufacturing.

### DESCRIPTION OF EMBODIMENTS

It is further understood that when a particular step of a method is referred to as subsequent to another step, it can directly follow said other step or one or more intermediate steps may be carried out before carrying out the particular step, so long as these steps fall within the scope of the appended claims. Likewise it will be understood that when a connection between structures or components is described, this connection may be established directly or through intermediate structures or components unless specified otherwise, so long as these modifications fall within the scope of the appended claims.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

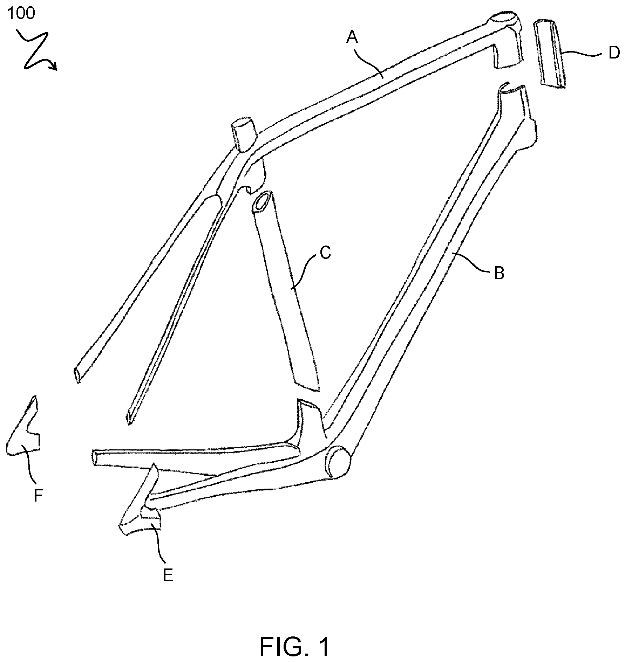

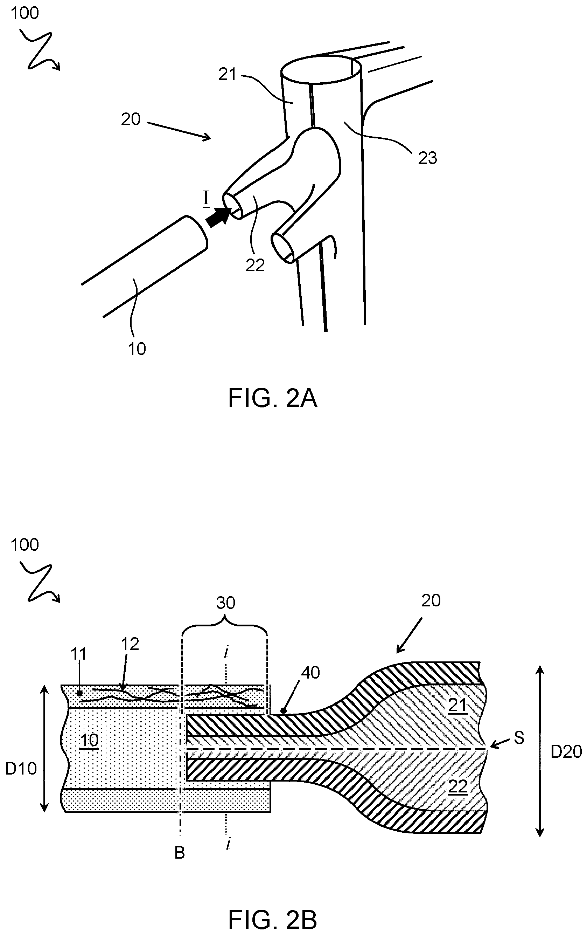

FIGs 1 and 2A illustrate a bicycle frame that comprises first hollow tube part 10 joined to a second hollow tube part 20. The second hollow tube part comprising at least a first fiber reinforced shell part 21 and a second fiber reinforced shell part 22.

Advantageously the invention simplifies bike frame manufacturing and/or design as it allows the frame (e.g. digitally cut up into) to be formed of a plurality of joined frame parts (frame members). By manufacturing a frame from smaller components, e.g. shell parts, a frame may be manufactured from a comparatively small set of comparatively easily manufactured components. This simplifies manufacturing of tailor made frames, e.g. frame size or frame models, without requiring a dedicated mould for each different frame.

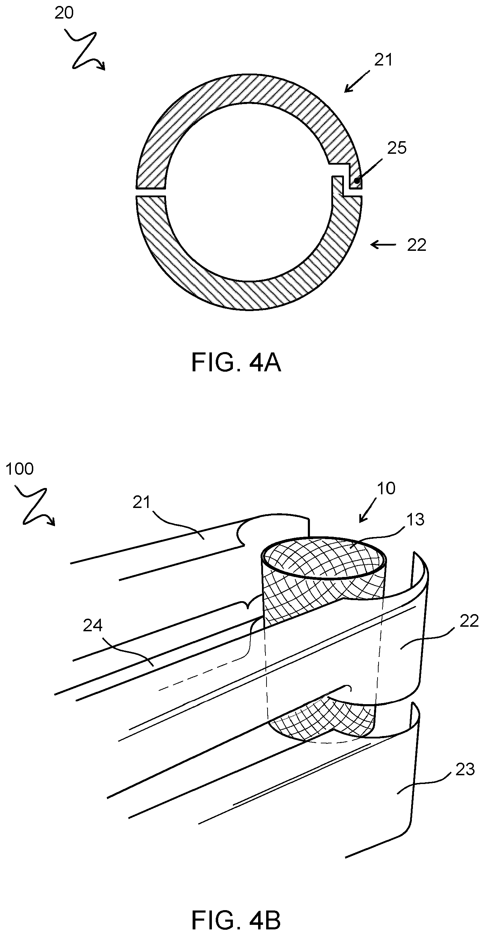

FIG 1 depicts a schematic exploded view of an embodiment of a bicycle frame 100 formed of joined frame members (A-F). Where possible the frame members are manufactured from fiber reinforced shell parts, e.g. as shown in FIG 2A depicting shell parts 21, 22, and 23 jointly comprised in a seat post of a bicycle frame 100, or as in FIG 4B depicting shell parts 21, 22, 23, and 24 jointly comprised in a head tube of a frame 100.

According to the method of the invention, the first hollow tube part 10 may optionally be formed of shell parts of thermoplastic fiber reinforced composite which comprises a thermoplastic polymer matrix 11 and an embedded structure of fibers 12 (reinforcement fibers). In some embodiments, , e.g. as shown in FIG 2B. e.g. if so required in view of an expected load, the embedded structure of fibers is preferably provided essentially around the tube.

The method of the invention further comprises providing shell parts for forming the second frame part. For the second frame part these include at least a first fiber reinforced shell part 21 and a second fiber reinforced shell part 22 such as shown in FIG 2B. Optionally, the method comprises providing shell parts for forming first frame part. Each shell part comprises a second thermoplastic fiber composite including a thermoplastic polymer matrix and fibers. The shell parts are designed to, upon fusing, form the respective frame part, e.g. the second hollow tube part 20. A shell part is preferably made from a thermoplastic fiber reinforced composite, for example, by making blanks from fiber reinforces tapes such as UD tapes (unidirectinally reinfored fiber tapes) comprising a structure of reinforcement fibers, e.g. a woven, braided, or twined structure of reinforcement fibers, or aligned bundles of fibers or other planar structures which can in a second manufacturing step be pressure moulded into a desired shell form. Alternatively such composite structures, e.g. layers or strips, may be placed or draped in a suitable shape, e.g. a mould, to be consolidated into the desired shape at an appropriate temperature and/or pressure. As a further alternative, it is foreseen that the shell parts can be manufactured by impregnating a dry structure of reinforcement fibers with a thermoplastic matrix material in a suitably designed mould, alternatively, a multicomponent mixture which chemically reacts to a thermoplastic matrix material can be used.

It will be appreciated that one or more of the shell parts and/or the hollow tube part may be provided with a solid insert allowing external parts to be affixed to the frame. The solid inset can be a metal part. For example, an aluminum part having a screw thread. The insert can be positioned in an appropriately dimensioned aperture provided in a face of the shell part and/or hollow tube part. Advantageously the insert can be anchored to the frame part upon consolidation of thermoplastic material comprised in the frame parts.

As described, the first frame part, e.g. the first hollow tube part 10 can be formed of shell parts. In view of reduced manufacturing complexity, the first frame part, e.g. the first hollow tube part 10 is typically a preformed hollow tube part, preferably a seamless hollow tube part. In particular manufacturability of seamless hollow tubes having a small diameter e.g. < about 3 to 4 cm. were found to display reduced manufacturing complexity compared to similarly dimensioned hollow tubes formed of interconnected shell parts for which manufacturing, in particular as small dimensions requires accurate positioning during the fusing step.

Preferably, the first hollow tube part 10 is made in a separate production step including heating and consolidating of a fiber structure comprising thermoplastic fibers and reinforcing fibers. A hollow tube comprising a braided fiber structure, e.g. a braided structure of reinforment fibers, may advantageously resist loads, e.g. tensile loads, from various directions.

Preferably, thermoplastic fibers and reinforcing fibers are braided in a form of a sleeve or sock, such that the first hollow tube part may be a continuous or seamless hollow tube part. In a preferred embodiment, the first hollow tube part is formed in a separate outer mould defining an outer diameter and/or an outer surface finish of said hollow tube part. Preferably, an inner mould or structure to apply pressure are arranged to form the first hollow tube part having an essentially constant and/or essentially round inner diameter. An essentially constant and essentially round inner diameter may be particularly beneficial to receive a round tubular bike part, e.g. saddle post or a steerer tube.

Alternatively, the first hollow tube parts can be manufactured by pultrusion, injection moulding, pull winding, or other winding methods or any similar suitable method known to the skilled person allowing manufacturing of shell parts wherein the reinforcement fibers have a length sufficient to cross the seam.

The method according to the invention further comprises positioning the first fiber reinforced shell part adjacent to the second fiber reinforced shell part across a seam S to form a second hollow tube part 20. The seam can be an overlap having a certain length, e.g. an overlap with a length in a range between five and twenty millimeters. In addition the method comprises inserting an end portion of the first hollow tube part 10 into the second hollow tube part 20, or inserting an end portion of the second hollow tube part 20 in the first hollow tube part 10, forming an overlap 30 between the first hollow tube part and the fiber reinforced shell parts, e.g. as shown in FIG 2B schematically illustrating a cross section side view of an embodiment of a bicycle frame at this stage of the manufacturing process. At the overlap 30 the embedded structure of fibers 11 of the first hollow tube part crosses a boundary B between the first hollow tube part and the second hollow tube part of shell parts.

The method according to the invention further comprises fusing the first fiber reinforced shell part, the second fiber reinforced shell part, and the first hollow tube part in their relative position to each other. Fusing preferably includes: heating the first hollow tube part and the fiber reinforced shell parts at least at a position of the overlap to a temperature above a softening temperature of the first and second thermoplastic fiber composite; and consolidating (e.g. cooling) the heated first and second thermoplastic fiber composite by pressure to form a fused interconnect between the hollow tube parts. After consolidation the frame parts are inseparably joined together up to a melting temperature. Advantageously, the method according to the invention can enable manufacture of a monocoque frame which is light weight and stiff.

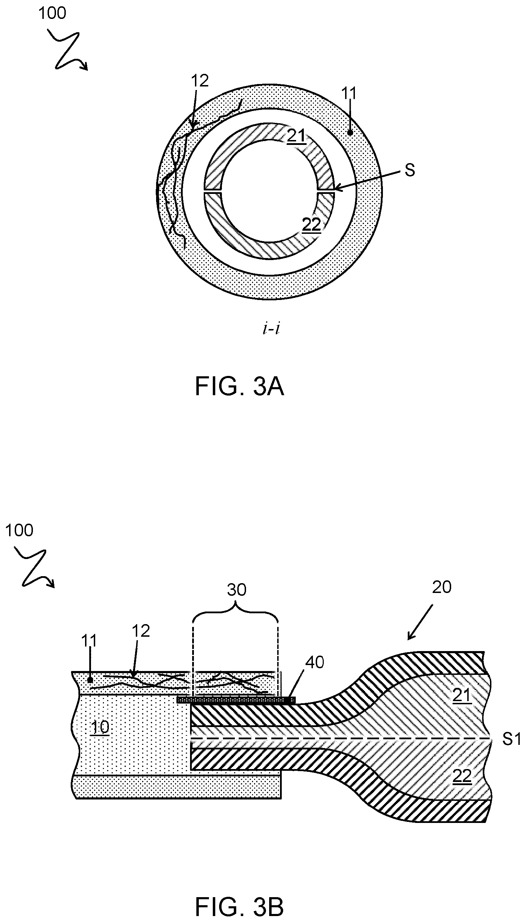

Preferably, the embedded structure of fibers also crosses the seam between the shell parts of the second hollow tube part at a position of the overlap, e.g. as shown in FIG 3A schematically depicting a cross section view of the embodiment depicted in FIB 2B. Inventors found embodiments wherein the embedded structure of fibers also crosses the seam between the shell parts of the second hollow tube part at a position of the overlap can have improved strength, e.g. at a position of the interconnection between the shell parts.

Preferably, the temperature at a position of the overlap is raised to a temperature above a melting temperature of the first and second thermoplastic fiber composite, e.g. of the respective thermoplastic polymer. Heating above a melting temperature of the thermoplastic fiber composites can improve flow and/or mixing of the thermoplastic fiber composites, e.g. across an interface or boundary between parts. Improved flow and/or mixing of the thermoplastic fiber composites across an interface, boundary, or seam between parts can even further improve a strength of the interconnection between tube part and shell parts and/or between the shell parts. Thus an improved formation of a strong integral bond between the parts can be obtained, thus improving monolithic behavior of the frame.

In a preferred embodiment, the first hollow tube part and/or the shell parts essentially consist of the respective thermoplastic fiber composite. By having the first hollow tube part and/or the shell parts respectively essentially consisting of, e.g. essentially formed of or made from, the respective thermoplastic fiber composite, a light weight yet stiff frame can be constructed. Preferably, the frame is manufactured without comparatively heavy metal tubes.

Inventors found that the embodiments wherein the first frame part is formed of a seamless hollow tube can be particularly suitable for joining frame parts of unequal diameter, i.e. in cases wherein the outer diameters D10 and D20 of the joined parts differ by a factor of at least two. For such cases inventors found that conventional methods to interconnect such parts, e.g. as described in US5350556, may yield a less strong and/or less durable interconnect. As described before, embodiments wherein the first frame part is formed of a seamless hollow tube may further be preferred in view of reduced manufacturing complexity when the outer diameter of the first frame part is small, e.g. below 30 mm or below 40 mm.

In some preferred embodiments, the shell parts and first hollow tube part are enclosed by an outer mould at least at the position of the overlap during fusing. Preferably the outer mould is formed of at least two matching outer mould parts. Preferably the outer mould is a heatable mould allowing to raise the temperature of at least the overlapping sections of the tube and shell parts above a softening temperature of the first and second thermoplastic fiber composite. Enclosing the parts can improve control over a final outer shape of the joint and/or improve a surface finish, e.g. provide a smooth surface finish, depending on a shape/dimension of the mould and/or on a smoothness of an inner surface of said mould. Providing a reduced surface roughness, e.g. along seam or across a boundary, may reduce a need for subsequent surface treatments, e.g. polishing of the frame.

In other or further preferred embodiments, the method comprises providing an internal pressure to the shell parts, i.e., from within the first and/or the second hollow tube part. Pressure can be applied by a fluid, e.g. a gas or a liquid. Either the fluid is contained by the parts themselves or by a material which can either be removed after consolidation or remains bonded after consolidation. Alternatively, pressure can be applied by a solid means, e.g., a pair of moving press members, simulating a hydrostatic pressure. In some embodiments, pressure can be applied by inserting a solid inset into the space within the frame parts at a position of the overlap. The inset having a considerably larger, e.g. at least 1.2 times larger, preferably more, e.g., 2 times larger, thermal expansion coefficient than the mould, such that, as temperature of the mould increases during the fusing step, the inset expands and pressurizes the frame parts against the mould. For example, in one embodiment, the inset can be of aluminum whereas the mould can be of steel, e.g. stainless steel. Typically, the pressure applied is in a range between about one and about nine bar. Preferred embodiments for applying pressure avoid deformation of a cross section or dimension of the first tube part and/or of the shell parts, e.g. due to reflow of material at elevated temperature. Maintaining a cross section of the first and/or second tube part may allow a proper fit of subsequent frame parts, e.g. a seat tube or steerer tube, in said frame part.

Alternatively, or in addition, a semi-solid inset, such as an elastomeric inset or similarly deformable inset, can be used to apply an internal pressure. The semi-solid inset is preferably removed after consolidation. Similar to solid insets the semi-solid inset may, at least in part, impart a localized pressure onto the frame parts due to expansion, e.g. thermal expansion. Advantageously, the semi-solid inset can conform to a topology (3D geometry) of the frame parts, e.g. at the overlap. A semi-solid inset improves the pressure distribution, in particular in comparison with solid insets. A semi-solid inset can be of particular benefit in combination with application of a hydrostatic pressure by a fluid. A semi-solid inset can, at least in part, transfer an applied hydrostatic pressure to a targeted portion of the frame while conforming to its topology, e.g. at the overlap.

Heat for fusing can be applied using a variety of means or combinations thereof. These include: radiative heating, e.g. via induction or microwaves; and heating through direct contact, e.g., via a heated mould and/or by heating the pressurizing medium, e.g. the gas. In some embodiments, heat is at least in part provided by a heated pressurizing fluid. By applying a heated fluid heat may at least partly be applied to the parts from an inner direction allowing a faster heating and/or a more homogeneous temperature distribution across the parts. A liquid fluid, e.g. water or oil, may advantageously have a comparatively larger heat capacity than a gas, enabling faster heat transfer and/or transfer of more heat within a given period of time.

In some preferred embodiments, e.g. as shown in FIG 3B a layer 40, e.g. a strip, of a thermoplastic material is provided between the first 10 and second hollow tube 20. Providing a layer 40, e.g. a strip, of a thermoplastic material can improve fusing of the frame parts and improve adhesion between the frame members at the overlap 30. Preferably, said layer 40 comprises the same thermoplastic material as the thermoplastic matrix material of the first hollow tube part and/or of the shell parts. Optionally the layer 40 is provided with reinforcement fibers, e.g. UD tape. Providing a layer 40 with reinforcement fibers results in a joint having an increased number of fibers, e.g. fibers crossing a boundary between joined frame members.

Preferably, layer 40, has a thickness in a range between 10 and 250 µm. A thickness within the specified range was found to improve contact between the hollow tube and the shell parts.

In other or further preferred embodiments, fibers or bundles of fibers comprised in the embedded structure of fibers and/or comprised in layer 40, cross the seam between the first hollow tube part and the shell parts at an angle in a range between 30 and 90 degrees, e.g. 45 degrees. Inventors found that fibers or bundles of fibers comprised in the embedded structure of fibers (and/or in layer 40) crossing the seam between the first hollow tube part and the shell parts at an angle within the specified range improves the strength of the interconnect between first hollow tube part and the shell parts in a direction of an expected or calculated load on the frame. It will be appreciated that the angle can depend on a direction of the expected or calculated load on the frame. Preferably, the fibers cross the seam between the shell parts at an angle in a range between 30 and 90 degrees.

In some embodiments, e.g. as shown in FIG 4A, at least one of the shell parts is provided with a tongue 25 arranged to provide at least a partial overlap along the seam between the shell parts 21 and 22. Alternatively there may be provided a complete overlap along the length of the parts. Provision of an overlap between the shell parts can improve strength of the formed fused tube. It will be appreciated that a tongue need not necessarily be provided. A good connection may alternatively be achieved between shell parts, e.g. non-overlapping shell parts or shell parts without tongues (e.g. butt-to-butt), by fusing the parts in during a heating step.

Accordingly, in some embodiments the temperature and/or pressure during the fusing stage is such that the shell parts matrix material may flow across a seam between the shell parts to form a monolithic connection. To this end the temperature during the fusing step is preferably raised above a flowing temperature, e.g. a melting temperature, of the thermoplastic polymer matrix material, preferably at least 5 degrees Celsius above said melting temperature, e.g. in a range between 5 and 25 °C. It was found that by bringing the thermoplastic polymer matrix material of the shell in a molten state a consistent fusion between the shell part may be attained.

It will be appreciated that the method according to the invention may be applied to any part of a bicycle frame. For example, the method of manufacturing a bicycle frame can applied to form one or more of:
- a connection between a seat post or seat tube and the frame;
- a connection between a head tube and the frame front fork members;
- a connection between a fork blade and a streerer tube; and
- a connection between a seat stay or chain stay and the frame.
See for example, FIG 4B, schematically illustrating a head tube portion of a bicycle frame 100 comprising a fused interconnect between a first hollow tube part 10 and two second hollow tube parts formed of shell fiber reinforced parts 20-24.

Further aspects of the present invention relate to a bicycle frame. Preferably, said frame can be obtained using the method of manufacturing according to the present invention. In agreement with the features disclosed in relation to said method the bicycle frame comprises a fused interconnect between: a first hollow tube part formed of a first thermoplastic fiber reinforced composite comprising a thermoplastic matrix and an embedded structure of fibers; and a second hollow tube part comprising at least a first fiber reinforced shell part and a second fiber reinforced shell part each formed of a second thermoplastic fiber composite comprising a thermoplastic matrix and fibers. The fused interconnect includes an overlap between the first hollow tube part and the second hollow tube part. The overlap preferably comprises at least a fused end portion of the first hollow tube part overlapping a portion of the second hollow tube, or an end portion of the second hollow tube part overlapping a section of the first hollow tube part, wherein the embedded structure of fibers of the first hollow tube part at the overlap crosses an overlap (a seam or boundary) between the hollow tube parts. Optionally or additionally, the fibers or bundles of fibers comprised in the embedded structure of fibers cross the seam between the first hollow tube part and the second hollow tube part at an angle in a range between 30 and 90 degrees.

As described in relation to the method of manufacturing, the first hollow tube part can preferably be a seamless hollow tube. Likewise, the first hollow tube part can preferably comprise a braided fiber structure that is provided essentially around said tube part. Further, it will be appreciated that an outer diameter of the first hollow tube part is preferably smaller than an outer diameter of the second hollow tube part by a factor of at least two. In some embodiments, the bicycle frame comprises a layer of a thermoplastic material, preferably the same thermoplastic material as the thermoplastic matrix material of the first hollow tube part and/or of the shell parts, between the first and second hollow tube parts. Said layer is provided at the interconnect between the hollow parts to improve adhesion between said parts.

For the purpose of clarity and a concise description, features are described herein as part of the same or separate embodiments, however, it will be appreciated that the scope of the invention which is solely defined by the appended claims may include embodiments having combinations of all or some of the features described as long as theses combinations fall within the scope defined by the appended claims.

## Claims

1. Method of manufacturing a bicycle frame (100), the method comprising:
- providing a first hollow tube part (10) comprising a first thermoplastic fiber reinforced composite comprising a thermoplastic polymer matrix (11) and an embedded structure of fibers (12);
- providing at least a first fiber reinforced shell part (21) and a second fiber reinforced shell part (22) each comprising a second thermoplastic fiber composite including a thermoplastic polymer matrix and fibers;
- positioning the first fiber reinforced shell part (21) adjacent to the second fiber reinforced shell part (22) across a seam (S) to form a second hollow tube part (20);
- inserting an end portion of the first hollow tube part (10) into the second hollow tube part (20), or inserting an end portion of the second hollow tube part (20) in the first hollow tube part (10), forming an overlap between the first hollow tube part (10) and the fiber reinforced shell parts (21, 22) wherein at the overlap (30) the embedded structure of fibers (11) of the first hollow tube part crosses a boundary (B) between the first hollow tube part (10) and the second hollow tube part of shell parts (20); and
- fusing the first fiber reinforced shell part (21), the second fiber reinforced shell part (22), and the first hollow tube part (10) in said relative position to each other, wherein fusing includes: heating the first hollow tube part (10) and the fiber reinforced shell parts (21, 22) at least at a position of the overlap to a temperature above a softening temperature of the first and second thermoplastic fiber composite; and consolidating the heated first and second thermoplastic fiber composite by pressure to form a fused interconnection between the hollow tube parts.

2. The method according to claim 1, wherein the first hollow tube part (10) is a seamless hollow tube part.

3. The method according to claim 1 or 2, wherein the first hollow tube part (10) comprises a braided or winded fiber structure (13) that is provided essentially around the tube.

4. The method according to any of the preceding claims, wherein the first hollow tube part (10) is formed in separate heating and consolidating steps of a braided fiber structure comprising thermoplastic fibers and reinforcing fibers.

5. The method according to any of the preceding claims, wherein an outer diameter (D10) of the first hollow tube part (10) is smaller than an outer diameter (D20) of the second hollow tube part (20) by a factor of at least two.

6. The method according to any of the preceding claims, wherein, during fusing, the shell parts and first hollow tube part (10) are enclosed by an outer mould at least at the position of the overlap.

7. The method according to any of the preceding claims, comprising providing a pressurizing medium within the first and/or the second hollow tube part (20) and applying a hydrostatic pressure in a range between about one and about nine bar.

8. The method according to any of the preceding claims, comprising providing a layer (40), e.g. a strip, of a thermoplastic material, preferably the same thermoplastic material as the thermoplastic matrix material of the first hollow tube part (10) and/or of the shell parts between the first (10) and second (20) hollow tube.

9. The method according to any of the preceding claims, wherein fibers or bundles of fibers comprised in the embedded structure of fibers (12) cross the seam between the first hollow tube part and the shell parts at an angle in a range between 30 and 90 degrees.

10. The method according to any of the preceding claims, wherein at least one of the shell parts is provided with a tongue (25) to arrange an overlap along the seam between the shell parts.

11. The method according to any of the preceding claims, wherein the method of manufacturing a bicycle frame is applied to form one or more of:
- a connection between a seat post or seat tube and the frame;
- a connection between a head tube and the frame front fork members;
- a connection between a fork blade and a streerer tube; and
- a connection between a seat stay or chain stay and the frame.

12. A bicycle frame (100), preferably obtainable by the method according to any of the preceding claims, the bicycle frame comprising a fused interconnection between:
o a first hollow tube part (10) comprising a first thermoplastic fiber reinforced composite comprising a thermoplastic matrix (11) and an embedded structure of fibers (12); and
o a second hollow tube part (20) comprising at least a first fiber reinforced shell part (21) and a second fiber reinforced shell part (22) each comprising a second thermoplastic fiber composite comprising a thermoplastic matrix (11) and fibers (12);
wherein the fused interconnection includes an overlap between the first hollow tube part (10) and the second hollow tube part (20) formed of: an end portion of the first hollow tube part (10) overlapping the second hollow tube (20), or of an end portion of the second hollow tube part (20) overlapping the first hollow tube part (10), wherein the embedded structure of fibers (12) of the first hollow tube part (10) at the overlap crosses an overlap between the hollow tube parts.

13. The bicycle frame according to claim 12, wherein the first hollow tube part (10) is a seamless hollow tube.

14. The bicycle frame according to claim 12 or 13, wherein the first hollow tube part (10) comprises a braided fiber structure that is provided essentially around said tube part.

15. The bicycle frame according to any of claims 12-14, wherein an outer diameter (D10) of the first hollow tube part (10) is smaller than an outer diameter (D20) of the second hollow tube part (20) by a factor of at least two.

16. The bicycle frame according to any of claims 12-15, comprising a layer of a thermoplastic material, preferably the same thermoplastic material as the thermoplastic matrix material (11) of the first hollow tube part (10) and/or of the shell parts, between the first (10) and second (20) hollow tube parts.

17. The bicycle frame according to any of claims 12-16, wherein fibers or bundles of fibers comprised in the embedded structure of fibers (12) cross the seam (S) between the first hollow tube part (10) and the second hollow tube part (20) at an angle in a range between 30 and 90 degrees.

## Patentansprüche

1. Verfahren zur Herstellung eines Fahrradrahmens (100), wobei das Verfahren umfasst:
- Bereitstellen eines ersten Hohlrohrteils (10), das einen ersten thermoplastischen faserverstärkten Verbundwerkstoff aufweist, der eine thermoplastische Polymermatrix (11) und eine eingebettete Faserstruktur (12) aufweist;
- Bereitstellen mindestens eines ersten faserverstärkten Schalenteils (21) und eines zweiten faserverstärkten Schalenteils (22), die jeweils einen zweiten thermoplastischen Faserverbundstoff aufweisen, der eine thermoplastische Polymermatrix und Fasern enthält;
- Positionieren des ersten faserverstärkten Schalenteils (21) neben dem zweiten faserverstärkten Schalenteil (22) über eine Naht (S) hinweg, um ein zweites Hohlrohrteil (20) zu bilden;
- Einführen eines Endabschnitts des ersten Hohlrohrteils (10) in das zweite Hohlrohrteil (20) oder Einführen eines Endabschnitts des zweiten Hohlrohrteils (20) in das erste Hohlrohrteil (10), wobei eine Überlappung zwischen dem ersten Hohlrohrteil (10) und den faserverstärkten Schalenteilen (21, 22) gebildet wird, wobei an der Überlappung (30) die eingebettete Faserstruktur (11) des ersten Hohlrohrteils eine Grenze (B) zwischen dem ersten Hohlrohrteil (10) und dem zweiten Hohlrohrteil der Schalenteile (20) überschreitet; und
- Verschmelzen des ersten faserverstärkten Schalenteils (21), des zweiten faserverstärkten Schalenteils (22) und des ersten Hohlrohrteils (10) in der genannten relativen Position zueinander, wobei das Verschmelzen enthält:
Erhitzen des ersten Hohlrohrteils (10) und des faserverstärkten Schalenteils (21, 22) zumindest an einer Position der Überlappung auf eine Temperatur oberhalb einer Erweichungstemperatur des ersten und zweiten thermoplastischen Faserverbundstoffs; und Verfestigen des erhitzten ersten und zweiten thermoplastischen Faserverbundstoffs durch Druck, um eine verschmolzene Verbindung zwischen den Hohlrohrteilen zu bilden.

2. Verfahren nach Anspruch 1, wobei das erste Hohlrohrteil (10) ein nahtloses Hohlrohrteil ist.

3. Verfahren nach Anspruch 1 oder 2, wobei der erste Hohlrohrteil (10) eine geflochtene oder gewickelte Faserstruktur (13) aufweist, die im Wesentlichen um das Rohr herum vorgesehen ist.

4. Verfahren nach einem der vorstehenden Ansprüche, wobei das erste Hohlrohrteil (10) in getrennten Erhitzungs- und Verfestigungsschritten aus einer geflochtenen Faserstruktur gebildet wird, die thermoplastische Fasern und Verstärkungsfasern aufweist.

5. Verfahren nach einem der vorstehenden Ansprüche, wobei ein Außendurchmesser (D10) des ersten Hohlrohrteils (10) um mindestens den Faktor zwei kleiner ist als ein Außendurchmesser (D20) des zweiten Hohlrohrteils (20).

6. Verfahren nach einem der vorstehenden Ansprüche, wobei während des Verschmelzens die Schalenteile und der erste Hohlrohrteil (10) zumindest an der Stelle der Überlappung von einer Außenform umschlossen sind.

7. Verfahren nach einem der vorstehenden Ansprüche, umfassend das Bereitstellen eines Druckmediums innerhalb des ersten und/oder des zweiten Hohlrohrteils (20) und das Anlegen eines hydrostatischen Drucks in einem Bereich zwischen etwa einem und etwa neun bar.

8. Verfahren nach einem der vorstehenden Ansprüche, umfassend das Bereitstellen einer Schicht (40), beispielsweise eines Streifens, aus einem thermoplastischen Material, vorzugsweise dem gleichen thermoplastischen Material wie das thermoplastische Matrixmaterial des ersten Hohlrohrteils (10) und/oder der Schalenteile zwischen dem ersten (10) und dem zweiten (20) Hohlrohr.

9. Verfahren nach einem der vorstehenden Ansprüche, wobei Fasern oder Faserbündel, die in der eingebetteten Faserstruktur (12) enthalten sind, die Naht zwischen dem ersten Hohlrohrteil und den Schalenteilen in einem Winkel im Bereich zwischen 30 und 90 Grad kreuzen.

10. Verfahren nach einem der vorstehenden Ansprüche, wobei mindestens eines der Schalenteile mit einer Lasche (25) versehen ist, um entlang der Naht zwischen den Schalenteilen eine Überlappung zu bilden.

11. Verfahren nach einem der vorstehenden Ansprüche, wobei das Verfahren zur Herstellung eines Fahrradrahmens zur Bildung einer oder mehrerer der folgenden Verbindungen angewendet wird:
- einer Verbindung zwischen einer Sattelstütze oder einem Sattelrohr und dem Rahmen;
- einer Verbindung zwischen einem Steuerrohr und den Vordergabelelementen des Rahmens;
- einer Verbindung zwischen einem Gabelholm und einem Gabelschaftrohr; und
- einer Verbindung zwischen einer Sitzstrebe oder Kettenstrebe und dem Rahmen.

12. Fahrradrahmen (100), vorzugsweise erhältlich durch das Verfahren nach einem der vorstehenden Ansprüche, wobei der Fahrradrahmen eine verschmolzene Verbindung zwischen folgenden Elementen umfasst:
O einem ersten Hohlrohrteil (10), das einen ersten thermoplastischen faserverstärkten Verbundwerkstoff aufweist, der eine thermoplastische Matrix (11) und eine eingebettete Faserstruktur (12) aufweist; und
O einem zweiten Hohlrohrteil (20), das mindestens ein erstes faserverstärktes Schalenteil (21) und ein zweites faserverstärktes Schalenteil (22) aufweist, die jeweils einen zweiten thermoplastischen Faserverbundstoff aufweisen, der eine thermoplastische Matrix (11) und Fasern (12) aufweist;
wobei die verschmolzene Verbindung eine Überlappung zwischen dem ersten Hohlrohrteil (10) und dem zweiten Hohlrohrteil (20) enthält, die gebildet wird durch: einen Endabschnitt des ersten Hohlrohrteils (10), der das zweite Hohlrohr (20) überlappt, oder durch einen Endabschnitt des zweiten Hohlrohrteils (20), der den ersten Hohlrohrteil (10) überlappt, wobei die eingebettete Faserstruktur (12) des ersten Hohlrohrteils (10) an der Überlappung eine Überlappung zwischen den Hohlrohrteilen kreuzt.

13. Fahrradrahmen nach Anspruch 12, wobei das erste Hohlrohrteil (10) ein nahtloses Hohlrohr ist.

14. Fahrradrahmen nach Anspruch 12 oder 13, wobei der erste Hohlrohrteil (10) eine geflochtene Faserstruktur aufweist, die im Wesentlichen um den Rohrteil herum vorgesehen ist.

15. Fahrradrahmen nach einem der Ansprüche 12 bis 14, wobei der Außendurchmesser (D10) des ersten Hohlrohrteils (10) um mindestens den Faktor zwei kleiner ist als der Außendurchmesser (D20) des zweiten Hohlrohrteils (20).

16. Fahrradrahmen nach einem der Ansprüche 12 bis 15, mit einer Schicht aus einem thermoplastischen Material, vorzugsweise dem gleichen thermoplastischen Material wie das thermoplastische Matrixmaterial (11) des ersten Hohlrohrteils (10) und/oder der Schalenteile, zwischen dem ersten (10) und dem zweiten (20) Hohlrohrteil.

17. Fahrradrahmen nach einem der Ansprüche 12 bis 16, wobei Fasern oder Faserbündel, die in der eingebetteten Faserstruktur (12) enthalten sind, die Naht (S) zwischen dem ersten Hohlrohrteil (10) und dem zweiten Hohlrohrteil (20) in einem Winkel im Bereich zwischen 30 und 90 Grad kreuzen.

## Revendications

1. Procédé de fabrication d'un cadre de bicyclette (100), le procédé comprenant les faits de :
prévoir une première partie de tube creux (10) comprenant un premier composite renforcé de fibre thermoplastique comprenant une matrice polymère thermoplastique (11) et une structure de fibre intégrée (12) ;
prévoir au moins une première partie de coque renforcée de fibre (21) et une deuxième partie de coque renforcée de fibre (22), comprenant chacune un deuxième composite de fibre thermoplastique comprenant une matrice polymère thermoplastique et des fibres ;
positionner la première partie de coque renforcée de fibre (21) adjacente à la deuxième partie de coque renforcée de fibre (22) sur une soudure (S) afin de former une deuxième partie de tube creux ;
insérer une partie d'extrémité de la première partie de tube creux (10) dans la deuxième partie de tube creux (20) ou insérer une partie d'extrémité de la deuxième partie de tube creux (20) dans la première partie de tube creux (10), formant un chevauchement entre la première partie de tube creux (10) et les parties de coque renforcées de fibre (21, 22), dans lequel au niveau du chevauchement (30), la structure de fibre intégrée (11) de la première partie de tube creux traverse une limite (B) entre la première partie de tube creux (10) et la deuxième partie de tube creux des parties de coque (20) ; et
fusionner la première partie de coque renforcée de fibre (21), la deuxième partie de coque renforcée de fibre (22) et la première partie de tube creux (10) dans ladite position relative les unes par rapport aux autres, dans lequel la fusion comprend : le fait de chauffer la première partie de tube creux (10) et les parties de coque renforcées de fibre (21, 22) au moins dans une position du chevauchement à une température supérieure à une température de ramollissement des premier et deuxième composites de fibre thermoplastique ; et le fait de consolider les premier et deuxième composites de fibre thermoplastique chauffés par pression afin de former une interconnexion fondue entre les parties de tube creux.

2. Procédé selon la revendication 1, dans lequel la première partie de tube creux (10) est une partie de tube creux sans soudure.

3. Procédé selon la revendication 1 ou 2, dans lequel la première partie de tube creux (10) comprend une structure de fibre tressée ou enroulée (13) qui est prévue essentiellement autour du tube.

4. Procédé selon l'une quelconque des revendications précédentes, dans lequel la première partie de tube creux (10) est formée lors d'étapes de chauffage et de consolidation séparées d'une structure de fibre tressée comprenant des fibres thermoplastiques et des fibres de renforcement.

5. Procédé selon l'une quelconque des revendications précédentes, dans lequel un diamètre externe (D10) de la première partie de tube creux (10) est inférieur à un diamètre externe (D20) de la deuxième partie de tube creux (20) selon un facteur d'au moins deux.

6. Procédé selon l'une quelconque des revendications précédentes, dans lequel, pendant la fusion, les parties de coque et la première partie de tube creux (10) sont entourées par un moule externe au moins dans la position du chevauchement.

7. Procédé selon l'une quelconque des revendications précédentes, comprenant les faits de prévoir un milieu de mise sous pression dans la première et/ou la deuxième partie de tube creux (20) et appliquer une pression hydrostatique dans une plage comprise entre environ un et environ neuf bars.

8. Procédé selon l'une quelconque des revendications précédentes, comprenant le fait de prévoir une couche (40), par exemple une bande, d'un matériau thermoplastique, de préférence du même matériau thermoplastique que le matériau de matrice thermoplastique de la première partie de tube creux (10) et/ou des parties de coque entre les premier (10) et deuxième (20) tubes creux.

9. Procédé selon l'une quelconque des revendications précédentes, dans lequel les fibres ou les faisceaux de fibres compris dans la structure de fibre intégrée (12) traversent la soudure entre la première partie de tube creux et les parties de coque à un angle dans une plage comprise entre 30 et 90 degrés.

10. Procédé selon l'une quelconque des revendications précédentes, dans lequel au moins l'une des parties de coque est prévue avec une languette (25) pour agencer un chevauchement le long de la soudure entre les parties de coque.

11. Procédé selon l'une quelconque des revendications précédentes, dans lequel le procédé de fabrication d'un cadre de bicyclette est appliqué pour former un ou plusieurs parmi :
- un raccordement entre une tige de selle ou un tube de selle et le cadre ;
- un raccordement entre un tube de direction et les éléments de fourche avant de cadre ;
- un raccordement entre un fourreau et une tige de fourche ; et
- un raccordement entre un hauban ou base et le cadre.

12. Cadre de bicyclette (100) pouvant être obtenu, de préférence, grâce au procédé selon l'une quelconque des revendications précédentes, le cadre de bicyclette comprenant une interconnexion fusionnée entre :
∘ une première partie de tube creux (10) comprenant un premier composite renforcé de fibre thermoplastique comprenant une matrice thermoplastique (11) et une structure de fibre intégrée (12) ; et
∘ une deuxième partie de tube creux (20) comprenant au moins une première partie de coque renforcée de fibre (21) et une deuxième partie de coque renforcée de fibre (22) comprenant chacune un deuxième composite de fibre thermoplastique comprenant une matrice thermoplastique (11) et des fibres (12) ;
dans lequel l'interconnexion fusionnée comprend un chevauchement entre la première partie de tube creux (10) et la deuxième partie de tube creux (20) formées avec : une partie d'extrémité de la première partie de tube creux (10) chevauchant sur le deuxième tube creux (20) ou avec une partie d'extrémité de la deuxième partie de tube creux (20) chevauchant sur la première partie de tube creux (10), dans lequel la structure de fibre intégrée (12) de la première partie de tube creux (10) au niveau du chevauchement traverse un chevauchement entre les parties de tube creux.

13. Cadre de bicyclette selon la revendication 12, dans lequel la première partie de tube creux (10) est un tube creux sans soudure.

14. Cadre de bicyclette selon la revendication 12 ou 13, dans lequel la première partie de tube creux (10) comprend une structure de fibre tressée qui est prévue essentiellement autour de ladite partie de tube.

15. Cadre de bicyclette selon l'une quelconque des revendications 12 à 14, dans lequel un diamètre externe (D10) de la première partie de tube creux (10) est inférieur à un diamètre externe (D20) de la deuxième partie de tube creux (20) selon un facteur d'au moins deux.

16. Cadre de bicyclette selon l'une quelconque des revendications 12 à 15, comprenant une couche d'un matériau thermoplastique, de préférence le même matériau thermoplastique que le matériau de matrice thermoplastique (11) de la première partie de tube creux (10) et/ou des parties de coques, entre les première (10) et deuxième (20) parties de tube creux.

17. Cadre de bicyclette selon l'une quelconque des revendications 12 à 16, dans lequel les fibres ou des faisceaux de fibres compris dans la structure de fibre intégrée (12) traversent la soudure (S) entre la première partie de tube creux (10) et la deuxième partie de tube creux (20) à un angle dans une plage comprise entre 30 et 90 degrés.
